**Europäisches Patentamt**

**European Patent Office**

**Office européen des brevets**

(19)

(11) Numéro de publication: **0 100 693**
**B1**

## (12) FASCICULE DE BREVET EUROPEEN

(45) Date de publication du fascicule du brevet:
**01.04.87**

(51) Int. Cl.⁴: $C\ 08\ F\ 2/32$, $C\ 08\ F\ 4/40$

(21) Numéro de dépôt: **83401256.9**

(22) Date de dépôt: **17.06.83**

(54) **Nouveau système redox liposoluble et son application aux réactions de polymérisation en émulsion inverse de monomères vinyliques hydrosolubles réactifs.**

(30) Priorité: **06.07.82 FR 8211817**

(43) Date de publication de la demande:
**15.02.84 Bulletin 84/7**

(45) Mention de la délivrance du brevet:
**01.04.87 Bulletin 87/14**

(84) Etats contractants désignés:
**BE CH DE GB LI NL**

(56) Documents cités:
**GB - A - 586 796**

**J. Pol. Sci., Part C, 23, 761 - 764 (1968)**

(73) Titulaire: **SOCIETE FRANCAISE HOECHST Société anonyme dite:, 3, avenue du Général de Gaulle, F-92800 Puteaux (FR)**

(72) Inventeur: **Cabestany, Jean, 127 Boulevard Gorki, F-93240 Stains (FR)**

(74) Mandataire: **Rinuy, Guy et al, 14, Avenue de la Grande Armée, F-75017 Paris (FR)**

## Description

La présente invention concerne un nouveau système redox liposoluble, son application aux réactions de polymérisation en émulsion inverse de monomères vinyliques hydrosolubles réactifs et les homo ou copolymères obtenus par l'emploi de ce couple redox.

Les réactions de polymérisation par radicaux libres sont habituellement amorcées, soit par des peroxydes, soit par des azoïques, soit enfin par des systèmes redox. Ces derniers, particulièrement employés pour la polymérisation en émulsion aqueuse, permettent d'initier les réactions de polymérisation à des températures moins élevées que les autres initiateurs cités, car l'énergie de formation des radicaux libres dans les réactions d'oxydoréduction est beaucoup plus basse: environ 10 kcal.mole au lieu de 30 kcal.mole pour la décomposition des peroxydes ou des dérivés azoïques.

Les systèmes redox les mieux connus sont les systèmes fer ferreux-peroxyde tels que le couple fer ferreux-peroxyde tels que le couple fer ferreux-peroxyde d'hydrogène. Le fer ferreux peut aussi être associé aux persulfates ou encore à un hydroperoxyde organique. On connaît aussi des systèmes plus complexes tels que les mélanges ternaires hydroperoxyde de cumène-polyamine aliphatique-sel ferreux ou des systèmes entièrement organiques tels que le couple peroxyde de benzoyle-diméthylaniline. D'autres couples sont décrits dans la littérature tels que les couples persulfatethiosulfate, persulfate-bisulfite ou encore le système chlorosulfite de méthyle-hydroperoxyde de tertiobutyle (voir J. Pol. Sci., Part C, 23, 761–764, 1968).

Par ailleurs, on sait que l'on peut accéder à des polyélectrolytes en poudre, solubles dans l'eau, à base d'acrylamide et d'un (méth)acrylate de dialkylaminoalkyle salifié ou quaternisé, présentant une viscosité intrinsèque déterminée à 25°C en solution molaire de chlorure de sodium supérieure à 6 dl/g, par polymérisation en émulsion inverse, eau dans huile, avec initiation par des radicaux libres. Ces réactions de polymérisation sont exothermiques et elles ne démarrent, très souvent, qu'après une période d'induction plus ou moins longue.

Si, au laboratoire, ces réactions de polymérisation ne posent aucun problème et peuvent être amorcées avec les systèmes redox classiques connus, il en est tout autrement au stade industriel où l'on exige des opérations courtes et reproductibles, facilement contrôlables tant à l'initiation que lors de la montée en température et enfin et surtout conduisant à une qualité de polymères constante. Or, l'emploi au stade industriel des systèmes redox classiques connus au cours de la polymérisation en émulsion inverse de monomères vinyliques hydrosolubles réactifs tels que l'acrylamide, l'acrylate de diméthylamino éthyle salifié ou quaternisé, conduit à des déboires: formation de microgels, polymères de faibles masses moléculaires, amorçage aléatoire, difficultés à contrôler les réactions exothermiques de polymérisation. En particulier l'emploi du système redox, hydroperoxyde de cumèneacétylacétonate de fer, décrit dans le brevet français N° 2 390 983 conduit industriellement à des réactions de polymérisation quelquefois trop lentes.

Afin de remédier à ces inconvénients contraires à une fabrication industrielle économique, la Demanderesse a découvert un nouveau système redox, liposoluble, autorisant une initiation des réactions de polymérisation en émulsion inverse, eau dans huile, de monomères vinyliques hydrosolubles réactifs à des températures voisines de 0°C, conduisant à un contrôle aisé du dégagement de chaleur et donnant en fin de réaction des polymères de qualité constante à hautes masses moléculaires exempts, entre autres, de microgels. Ce nouveau système redox est le couple hydroperoxyde organique-chlorure de thionyle en particulier le couple hydroperoxyde de cumène-chlorure de thionyle. Il est entièrement soluble dans la phase continue huile et très peu soluble dans l'eau. La Demanderesse n'a pas élucidé le mécanisme réactionnel d'un tel système redox, mais elle suppose que le chlorure de thionyle réagit préférentiellement sur les groupements hydroperoxydes nettement plus nucloéphiles que l'eau, puis qu'il se produit une rupture homolytique.

Expérimentalement, la Demanderesse a découvert que le rapport molaire hydroperoxyde de cumène sur chlorure de thionyle doit être compris entre 0,1 et 1, avantageusement ce rapport molaire est de 0,4.

L'utilisation de ce nouveau couple redox hydroperoxyde de cumène-chlorure de thionyle, comme initiateur de réactions de polymérisatoin en émulsion inverse, eau dans huile, de monomères vinyliques réactifs hydrosolubles, est réalisée sous des conditions expérimentales sensiblement identiques à celles décrites avec les couples redox classiques sauf en ce qui concerne les températures d'initiation. Les concentrations mises en œuvre sont du même ordre de grandeur et peuvent varier de 0,01 à 0,1 g pour 100 g de monomères engagés dans la polymérisation, avantageusement cette concentration en poids par rapport au poids des monomères est de 0,05 $\pm$ 0,01%.

Bien entendu, si on désire des masses moléculaires plus faibles, donc des longueurs de chaîne cinétique, $\lambda$, plus courtes, on utilisera des concentrations d'initiateur, [A], plus importantes, car on sait, en effet, que $\lambda$ est fonction de [A] à la puissance -m, $\lambda = f([A]^{-m})$ avec m compris entre 0,5 et 1.

Les autres paramètres des réactions de polymérisation en émulsion inverse amorcées par le couple redox selon l'invention tels que la nature et la concentration en émulsifiants à bas HLB (hydrophilic lipophilic balance), la concentration en monomère(s), les masses de la phase huile et de la phase eau sont connus. Les esters d'acides gras de sorbitanne, par exemple le monooléate de sorbitanne, sont des émulsifiants de choix pour ce type de polymérisation, leur concentration peut varier de 0,1 à 3% par rapport au poids total du milieu réactionnel. Le rapport poids de la phase huile sur poids de la phase aqueuse peut varier de 0,2 à 3.

Avantageusement, le système redox selon l'invention autorise l'amorçage de réactions de polymérisation en émulsion inverse avec des concentrations initiales en monomères, $C_o$, de l'ordre de 30 à 60% en poids par rapport au poids total du milieu réactionnel et ceci malgré l'emploi de monomères hydrosolubles très réactifs se polymérisant ou se copolymérisant avec un fort dégagement de chaleur. En effet, grâce à la faculté du couple redox selon l'invention d'initier ces réactions de polymérisation à basses températures vers 0 °C ou même en dessous, la chaleur de la polymérisation est entièrement absorbée par le milieu réactionnel sans qu'il soit nécessire de le refroidir. Industriellement, on note des montées en températures maximales en fonction du temps, $(d\theta/dt)$ max. de 25 à 35 °C par minute avec des températures maximales, $\theta$ max, de l'ordre de 80 à 100 °C atteintes en un temps, t, de l'ordre de 10 à 20 minutes. Les temps d'induction, $t_i$, sont très courts, de l'ordre de 1 minute à des températures d'initiation, $\theta i$, comprises entre 0 et 5 °C. Ainsi, le couple redox selon l'invention conduit à des cinétiques réactionnelles hautement performantes, donne des réactions rapides, fournit des taux de conversion élevés et les homopolymères ou copolymères obtenus sont linéaires, solubles dans l'eau et présentent des poids moléculaires très élevés. Ces qualités sont illustrées par la valeur de leur viscosité intrinsèque, déterminée à 25 °C en solution molaire de chlorure de sodium, toujours supérieure à 6 dl/g.

Les réactions de polymérisation sont initiées sous azote après désoxygénation soignée des réactifs et solvants, soit par dégazage sous vide, soit par barbotage d'azote. L'introduction du couple redox est effectuée dans l'émulsion eau dans huile préalablement préparée contenant le(s) monomère(s) et le ou les émulsifiant(s) à bas HLB choisis; cette introduction est réalisée en dissolvant dans la phase huile de l'émulsion, l'hydroperoxyde de cumène puis en ajoutant sous agitation et à la température d'initiation choisie $\theta i$, habituellement voisine de $0 \pm 5$ °C, le chlorure de thionyle généralement en solution dans le solvant organique utilisé dans la phase huile à une vitesse telle que la pente moyenne de la courbe de montée en température en fonction du temps soit comprise entre 5 et 15 °C par minute.

La phase huile est constituée, soit par des alcanes linéaires ou ramifiés, soit par des cycloalcanes substitués ou non. soit par des aromatiques. Ces solvants sont liquides à la température ambiante, non miscibles à l'eau et présentent un point d'ébulliton supérieur à 75 °C à la pression ambiante.

L'hydroperoxyde de cumène est un produit commercial. Il se présente sous forme d'un liquide contenant pondéralement 70–73% d'hydroperoxyde de cumène dans un mélange d'alcools, cétones et cumène. Dans tous les calculs de la présente description, l'hydroperoxyde de cumène est compté à 100%, mais, dans les exemples, le produit utilisé est le produit commercial à 70–73%.

Parmi les monomères vinyliques hydrosolubles réactifs, on peut citer:

a – les N-(N',N'-dialkylaminoalkyl) (méth) acrylamides salifiés ou quaternisés tels que:
– le chlorure de N-(N',N',N'-triméthylammonio-3 propyl) méthacrylamide, MAPTAC
– le chlorure de N-(N',N',N'-triméthylammoniopropyl) acrylamide, CAPTMA,

b – les (méth) acrylates de N,N-dialkylaminoalkyle salifiés ou quaternisés tels que
– le chlorure d'acrylate de N,N-diméthylammonio-2 éthyle, CHA;
– le chlorure d'acrylate de N,N,N-triméthylammonio-2 éthyle, CMA;
– le méthylsulfate d'acrylate de N,N,N-triméthyl-ammonio-2 éthyle, MAS;

c – les diallylamindes-N-alkylées salifiées ou quaternisées telles que le chlorure de diméthyl-diallylammonium, DADMAC;

d – les monomères vinyliques anioniques tels que:
– les sels alcalins de l'acide acrylique
– les sels alcalins de l'acide méthacrylique
– l'acrylate d'ammonium
– les sels alcalins ou d'ammonium de l'acide acrylamido-2 méthyl-2 propanesulfonique-1, AMPS.

e – l'acrylate, AAM, et la méthacrylamide, MAM.

Les exemples suivants sont donnés à titre explicatif et nullement limitatif de l'invention. Sauf indication contraire, les viscosités intrinsèques sont déterminées à 25 °C en solution molaire de chlorure de sodium et les viscosités mesurées avec l'appareil de Brookfield sont déterminées à 20 °C, à la vitesse de 50 tours par minute avec l'axe 2.

EXEMPLE 1

On mélange, à une température inférieure à 25 °C, 298,1 g d'acide acrylique à 95% dans 260 g d'eau et 197 g d'ammoniaque à 34%, $d = 0,89$. Puis, on ajuste, si nécessaire, le pH de la solution obtenue à 6 avec de l'ammoniaque. Cette solution est ensuite introduite sous agitation dans une solution de 260 g d'alcances normaux en $C_{10}–C_{12}$ présentant un point d'ébullition compris entre 195 et 230 °C et de 29,6 g d'isostéarate de sorbitanne. L'émulsion obtenue est ensuite homogénéisée avec un broyeur à colloïdes pendant 90 secondes. On obtient ainsi une émulsion présentant une viscosité Brookfield déterminée à 20 tours par minute à 20 °C comprise entre 400 et 800 mPa.s. L'émulsion est ensuite soigneusement désoxygénée par un barbotage d'azote, puis elle est refroidie à $+5$ °C. A cette température, on ajoute une solution de 0,08 g d'hydroperoxyde de cumène commercial à 70–73% dans 10 cm³ d'alcanes normaux en $C_{10}–C_{12}$ puis, sous agitation et en atmosphère d'azote, on introduit goutte à goutte (débit 0,5 cm³/min) une solution de 0,105 g de chlorure de thionyle dans 30 cm³ d'alcanes normaux en $C_{10}–C_{12}$. Une minute après le début de l'introduction du chlorure de thionyle, une réaction exothermique se développe avec une élévation de température de 4 à 6 °C par minute. En 19 minutes, le milieu réactionnel est à la température de 87 °C, soit une élévation de température de 82 °C. On abandonne le milieu réactionnel 1 heure à cette température avec un léger chauffage extérieur, puis on le refroidit à la température ambiante. On obtient ainsi une dispersion, eau dans huile, de polyacrylate d'ammonium présentant une viscosité Brookfiled de 100–150 mPa.s et une viscosité Brookfiled à 0,5% dans l'eau distillée de 1500–2000 mPa.s. Cette dispersoin possède un extrait sec de 34%.

### EXEMPLE 2

On mélange, à une température inférieure à 25 °C, 46 g d'acrylate de diméthylaminoéthyle commercial dans 401 g d'eau et 31 g d'acide chlorhydrique à 38%, $d = 1,188$; puis on ajuste le pH de la solution obtenue à 2,8 par addition, soit d'acide chlorhydrique, soit d'acrylate de diméthylaminoéthyle.

On introduit ensuite 262,3 g d'acrylamide cristallisé. Cette solution est ensuite ajoutée sous agitation dans une solution de 260 g d'alcanes normaux en $C_{10}$–$C_{12}$ présentant un point d'ébullition compris entre 195 et 230 °C et de 22,4 g d'isostéarate de sorbitanne. L'émulsion obtenue est homogénéisée pendant 90 secondes avec un broyeur à colloïdes, puis elle est refroidie à +5 °C et, enfin, elles est soigneusement désoxygénée par un barbotage d'azote.

A cette température, sous azote et sous agitation, on ajoute une solution de 0,046 g d'hydroperoxyde de cumène commercial à 70–73% dans 10 cm³ d'alcanes normaux en $C_{10}$–$C_{12}$, puis on introduit, goutte à goutte avec un débit de 0,5 cm³ par minute, une solution de 0,0645 g de chlorure de thionyle dans 30 cm³ d'alcanes normaux en $C_{10}$–$C_{12}$. Une minute après le début de l'introduction du chlorure de thionyle, une réaction exothermique se dévelope avec une élévation de température de 8 à 9 °C par minute. En 9 minutes, la température du milieu réactionnel atteint 80 °C, soit une élévation de température de 75 °C. On abandonne le milieu réactionnel 1 heure à cette température avec un léger chauffage extérieur, puis on le refroidit à la température ambiante. On obtient ainsi une dispersion, eau dans huile de copolymères acrylamide-chlorhydrate d'acrylate de diméthylaminoéthyle, AAM-CHA, 92/8 en proportions molaires, présentant une viscosité Brookfield de 110–160 mPa.s et une viscosité Brookfield à 0,5% dans l'eau distillée de 800–1000 mPa.s (axe 3). Ce copolymère possède une viscosité intrinsèque de 13 dl/g. L'extrait sec de la dispersion est de 33,7%.

### EXEMPLE 3

On dissout 57,7 g d'acide acrylamido-2 méthyl-2 propanesulfonique commercial dans 375 g d'eau contenant 11,2 g d'hydroxyde de sodium en pastilles, puis on ajoute à cette solution 256 g d'acrylamide cristallisé. La solution obtenue, présentant un pH = 6,5, est ensuite introduite sous agitation dans 300 g d'alcanes normaux, en $C_{10}$–$C_{12}$ de point d'ébullition compris entre 195 et 230 °C contenant 21 g de monoléate de sorbitanne. Puis, l'émulsion est homogénéisée pendant 90 secondes dans un broyeur à colloïdes. L'émulsion ainsi préparée est désoxygénée soigneusement par un barbotage d'azote, elle est ensuite refroidie à +5 °C et à cette température, sous agitation et en atmosphère inerte, on introduit 0,046 g d'hydroperoxyde de cumène en solution dans 10 cm³ d'alcanes normaux en $C_{10}$–$C_{12}$, puis goutte à goutte, avec un débit de 0,25 cm³ par minute, une solution de 0,0645 g de chlorure de thionyle dans 30 cm³ d'alcanes normaux en $C_{10}$–$C_{12}$.

On observe le démarrage d'une réaction exothermique deux minutes après le début de l'introduction du chlorure de thionyle avec une élévation de température du milieu réactionnel de 6 °C par minute qui se stabilise vers 81 °C après 12 minutes. On maintient cette température pendant 1 heure avec un léger chauffage extérieur puis l'émulsion est refroidie à la température ambiante. On obtient ainsi une dispersion eau dans huile d'un copolymère acrylamide-acrylamido-2 méthyl-2 propanesulfonate de sodium, 96,5/3,5 en proportions molaires, présentant une viscosité à 1% dans l'eau distillée de 4000–4500 mPa.s. L'extrait sec de la dispersion est de 34,5%

### EXEMPLE 4

On introduit dans un réacteur de 2 litres, une solution de 4 g de monooléate de sorbitanne dans 468 g de cyclohexane puis, après purge de l'air par de l'azote, on introduit sous azote et sous agitation une solution de 172,8 g (0,89 mole) d'acrylate de diméthylaminoéthyle quaternisé par le chlorure de méthyle, CMA, et de 27,2 g (0,38 mole) d'acrylamide, AAM, dans 200 g d'eau dont le pH est ajusté à 4,5 par addition d'acide sulfurique dilué, puis l'émulsion est refroidie à +8 °C. On introduit ensuite, toujours sous agitation et en atmosphère d'azote, une solution de 0,043 g d'hydroxyperoxyde de cumène à 70% dans 12 g de cyclohexane puis, quelques minutes après, on introduit goutte à goutte à un débit de 0,5 cm³ par minute une solution de 0,0645 g de chlorure de thionyle dans 30 cm³ de cyclohexane. De suite, la réaction de copolymérisation démarre; la température réactionnelle atteint 70–75 °C en 7 minutes. Après une heure d'agitation à l'ébullition, on élimine l'eau par distillation azéotropique jusqu'à un taux d'eau résiduelle de 15%. Ensuite, le milieu réactionnel refroidi à la température ambiante est filtré, puis le filtrat est lavé au cyclohexane (170 ml) et enfin il est séché en lit fluidisé à 95 °C durant 30 minutes. On isole ainsi un copolymère AAM-CMA 30/70, en poudre à 96% d'extrait sec, entièrement soluble dans l'eau présentant une viscosité intrinsèque de 13 dl/g.

Il va de soi que la présente invention n'a été décrite qu'à titre purement explicatif et nullement limitatif.

**Revendications**

1. Couple redox, liposoluble, utilisable pour amorcer des réactions de polymérisation en émulsion inverse, eau dans huile, de monomères vinyliques hydrosolubles réactifs à des températures voisines de 0 °C, caractérisé par le fait qu'il est constitué par un hydroperoxyde organique et du chlorure de thionyle.

2. Couples redox selon la revendicatin 1, caractérisé par le fait que l'hydroperoxyde organique est l'hydroperoxyde de cumène.

3. Couple redox selon l'une quelconque des revendications 1 et 2, caractérisé par le fait que le rapport molaire hydroperoxyde organique sur chlorure de thionyle est compris entre 0,1 et 1.

4. Application du couple redox selon l'une quelconque des revendications 1 à 3 à la polymérisation en émulsion inverse, eau dans huile, de monomères vinyliques hydrosolubles réactifs.

5. Application selon la revendication 4 à la préparation de copolymères acrylamide-acrylate de diméthylaminoéthyle salifié ou quaternisé.

6. Application selon la revendication 4 à la préparation de copolymère acrylamide-acide acrylamido-2 méthyl-2-propanesulfonique salifié.

7. Homopolymère ou copolymères hydrosolubles obtenus par polymérisation en émulsion inverse, eau dans huile, de monomère(s) vinylique(s) hydrosoluble(s) réactif(s), caractérisés par le fait que la réaction de polymérisation est amorcée par un couple redox liposoluble selon la revendication 1.

**Patentansprüche**

1. Lipidlösliche Redoxsysteme zum Starten von Polymerisationsreaktionen von bei Temperaturen in der Nähe von 0 °C reaktionsfähigen, wasserlöslichen Vinylmonomeren in umgekehrten Wasser-in-Öl-Emulsionen, dadurch gekennzeichnet, dass sie von einem organischen Hydroperoxid und Thionylchlorid gebildet werden.

2. Redoxsysteme nach Anspruch 1, dadurch gekennzeichnet, dass das organische Hydroperoxid Cumolhydroperoxid ist.

3. Redoxsystem nach einem der Ansprüche 1 und 2, dadurch gekennzeichnet, dass das Molverhältnis von organischem Hydroperoxid zu Thionylchlorid zwischen 0,1 und 1 liegt.

4. Anwendung des Redoxsystems nach einem der Ansprüche 1 bis 3 zur Polymerisation von reaktionsfähigen, wasserlöslichen Vinylmonomeren in umgekehrter Wasser-in-Öl-Emulsion.

5. Anwendung nach Anspruch 4 zur Herstellung von in Salzform vorliegenden oder quaternisierten Acrylamid/Dimethylaminoethylacrylat-copolymeren.

6. Anwendung nach Anspruch 4 zur Herstellung von in Salzform vorliegenden Acrylamid/Acrylamido-2-methyl-2-propansulfonsäure-copolymeren.

7. Wasserlösliche Homopolymere oder Copolymere, hergestellt durch Polymerisation von wasserlöslichem/n, reaktionsfähigem/n Vinylmonomerem/n in umgekehrter Waser-in-Öl-Emulsion, dadurch gekennzeichnet, dass die Polymerisationsreaktion durch ein lipidlösliches Redoxsystem nach Anspruch 1 gestartet worden ist.

**Claims**

1. Redox ouple, liposoluble, capable of being used to initiate polymerization reactions in an inverse, water-in-oil, emulsion of water-soluble vinyl monomers which are reactive at temperatures in the region of 0 °C, charactrized in that it consists of an organic hydroperoxide and thionyl chloride.

2. Redox couples according to Claim 1, characterized in that the organic hydroperoxide is cumene hydroperoxide.

3. Redox couple according to either of Claims 1 and 2, characterized in that the molar ratio of organic hydroperoxide to thionyl chloride is between 0.1 and 1.

4. Application of the redox couple according to any one of claims 1 to 3 to the polymerization in inverse, water-in-oil, emulsion of reactive water-soluble vinyl monomers.

5. Application according to Claim 4 to the preparation of copolymers of acrylamide with dimethylaminoethyl acrylate which is in salt form or quaternized form.

6. Application according to Claim 4 to the preparation of copolymer of acrylamide with 2-acrylamido-2-methylpropanesulphonic acid in salt form.

7. Water-soluble copolymers or homopolymer which are obtained by polymerization in inverse, water-in-oil, emulsion of reactive water-soluble vinyl monomer(s), characterized in that the polymerization reaction is initiated by a liposoluble redox couple according to Claim 1.